# EUROPEAN PATENT SPECIFICATION

(11) **EP 2 075 165 B1**
(45) Date of publication and mention of the grant of the patent: **27.05.2015**
(21) Application number: 08253336.5
(22) Date of filing: 15.10.2008
(51) Int. Cl.: B60R 21/16, B60R 21/00

(54) **Low-floor type vehicle with airbag**
Tiefergelegtes Fahrzeug mit Airbag
Véhicule de type à plancher bas doté d'un airbag

(30) Priority: 27.12.2007 JP 2007338145
(43) Date of publication of application: 01.07.2009
(73) Proprietor: Honda Motor Co., Ltd., Minato-ku Tokyo (JP)
(72) Inventor: Suzuki, Kazuhiro , Honda R&D Co., Ltd., Saitama, 351-0193 (JP); Kobayashi, Yuki , Honda R&D Co., Ltd., Saitama, 351-0193 (JP)
(74) Representative: Stevens, Jason Paul

(56) References cited:
- EP-A2- 1 342 653
- EP-A2- 1 813 519
- JP-A- 2002 137 779
- US-A1- 2005 040 628

## Description

The present invention relates to a low-floor type vehicle equipped with an airbag module at the front portion thereof.

A motorcycle equipped with an airbag device expanding upon impact or the like is known from, for example, JP 2007-83954.

In Fig. 17 of this document, a motorcycle (denoted by the reference numeral 100) includes a steering handlebar 104, an airbag device 120 provided rearward of the handlebar 104, a fuel tank 106 provided rearward of the airbag device 120, and a seat 103 provided rearward of the fuel tank 106. Webbing 140 (hereinafter, called "bag-mooring members 140") is provided between the airbag device 120 and a vehicle body to guide and retain an airbag at an appropriate position upon rapid expansion of the airbag. The expansion and deployment of the airbag can appropriately be done by these bag-mooring members 140.

However, it is difficult to employ the arrangement of the bag-mooring members 140 applied to the motorcycle 100 of JP 2007-83954 on a low-floor type vehicle (such as a scooter) which differs from the motorcycle 100 in vehicle-body structure and in occupant-mounting posture. Thus, scooter-type vehicles require a different solution that can smoothly guide a bag-mooring member in the deploying direction thereof.

Other types of two-wheeled vehicles with airbags are disclosed in EP 1342653, JP 2002-137779, US 2005/0040628 and EP 1813519.

It is an object of at least the preferred embodiment of the present invention to provide a technique of smoothly guiding a bag-mooring member in the deploying direction thereof in a low-floor type vehicle installed with an airbag device.

According to a first aspect of the invention, there is provided a low-floor type vehicle comprising: a head pipe rotatably supporting a steering handlebar which may be steered by an occupant of the vehicle; a main frame extending downwardly and rearwardly from the head pipe; an occupant seat provided rearwards of the head pipe and adapted to allow the occupant to sit thereon; a straddle space defined between the occupant seat and the steering handlebar and straddled by the occupant; a cowl provided below the straddle space to cover the main frame; left and right step floors on which the occupant's feet may be placed respectively provided at left and right side portions below the occupant seat; and an airbag module provided forward of the occupant seat and storing an airbag therein; wherein the airbag module is disposed rearward of the head pipe, a pair of left and right bag-mooring members is provided for retaining the airbag at a position facing the occupant upon expansion and deployment of the airbag, the bag-mooring members are arranged between the left and right step floors in a plan view of the vehicle and along a space defined between an upper portion of the main frame and the cowl; the pair of bag-mooring members each have one end connected to the airbag and the other end connected to the main frame at a position below the occupant seat; and an inner surface of the cowl is formed with a fragile portion facing the pair of bag-mooring members which are arranged along the upper portion of the main frame.

The airbag is connected to the main frame by using a pair of left and right bag-mooring members retaining the airbag at a position facing the occupant, the bag-mooring members being arranged along the main frame. Since the other ends of the bag-mooring members are connected to a position below the occupant seat, the airbag can be moored at a position near the occupant upon deployment of the airbag.

Further, upon expansion and deployment of the airbag, one end (the front end) of each of the bag-mooring members which are connected to the airbag are first lifted. Along with the expansion and deployment of the airbag, the bag-mooring members are lifted along the main frame from the one ends (the front ends) of the bag-mooring members toward the other ends (the rear ends). As described above, the bag-mooring members are arranged along the main frame; therefore, it is possible for the bag-mooring members to smoothly guide the airbag in the deploying direction thereof.

Further, during non-operation of the airbag device, the bag-mooring members are covered by the cowl. Because of this, it is possible to make it improve the external appearance of the vehicle.

When the airbag is deployed, the bag-mooring member hits the fragile portion formed in the internal surface of the cowl to form an opening in a portion of the cowl. The bag-mooring member is drawn out of the opening. Thus, it is possible to smoothly deploy the airbag.

In a preferred form, the main frame includes a pair of left and right upper frames extending downwardly rearward from an upper portion of the head pipe, a pair of left and right lower frames extending downwardly rearward from a lower portion of the head pipe, and connecting members extending vertically between one of the upper frames and a corresponding one of the lower frames; and the said other end of each of the bag-mooring members is connected to a corresponding one of the connecting members.

The position of the other end of the bag-mooring member may be changed depending on the type of vehicle in some cases. In such a case, the other end of the bag-mooring member is connected to the connecting member which extends vertically between the upper and lower frames. This makes it easy to vertically change the attachment position of the other end of the bag-mooring member. Thus, the invention can be applied to many types of vehicle, which can suppress an increase in the cost of a vehicle.

A preferred embodiment of the invention will now be described by way of example only and with reference to the accompanying drawings, in which:
Fig. 1 is a left side view of a low-floor type vehicle according to the preferred embodiment of the present invention;
Fig. 2 is a plan view of a portion of the low-floor type vehicle;
Fig. 3 is a side view of a main frame with an airbag device mounted thereon;
Fig. 4 is a plan view of the main frame with the airbag device mounted thereon;
Fig. 5 is a rear view of the main frame with the airbag device mounted thereon;
Fig. 6 is a plan view for assistance in explaining the arrangement relationship between an airbag module and a cowl;
Fig. 7 is a cross-sectional view taken along line 7-7 of Fig. 6;
Figs. 8(a) and 8(b) are cross-sectional views taken along line 8-8 of Fig. 2;
Figs. 9(a) and 9(b) are cross-sectional views taken along line 9-9 of Fig. 2;
Figs. 10(a) and 10(b) are side views explaining the initial operation of the airbag device during normal travel;
Fig. 11 is a cross-sectional view showing how the upper surface of the airbag module is opened to deploy the airbag; and
Fig. 12 is a side view showing the final deployment of the airbag device.

In the drawings, "front" is the direction in which a rider usually looks, and "back" or "rear", "left", "right", "up" and "down" are defined accordingly. The drawings should be viewed based on the orientation of reference numerals or symbols.

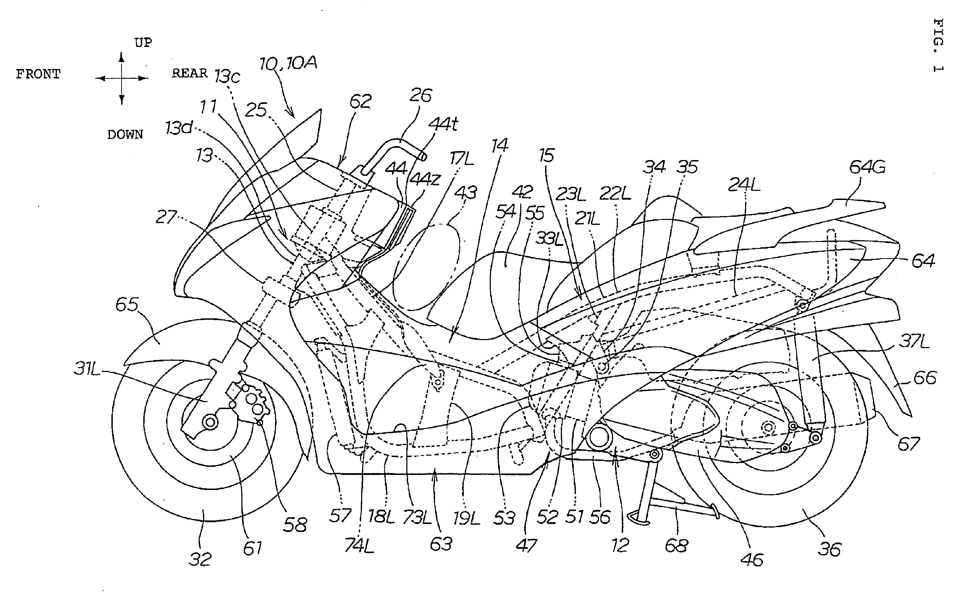

Fig. 1 is a left side view of a low-floor type vehicle according to an embodiment of the present invention. Specifically, the low-floor type vehicle 10 is a scooter-type motorcycle 10A, and includes a body frame 11 and a power unit 12 suspended from the body frame 11 which serves as a drive source.

The body frame 11 is composed of a head pipe 13, a main frame 14 joined at a leading end to the head pipe 13 and extending rearwards and downwards from the head pipe 13, and a rear frame 15 joined to the main frame 14 and extending rearwards.

The main frame 14 is a member including, as constituent members, a pair of left and right upper frames 17L, 17R (only 17L is shown in Figure 1) extending downwards and rearwards from an upper portion 13c of the head pipe 13; and a pair of left and right lower frames 18L, 18R (only 18L is shown in Figure 1) extending downwards and rearwards from a lower portion 13d of the head pipe 13. Connecting members 19L and 19R (only 19L is shown in Figure 1) extend between the upper frame 17L and the lower frame 18L and between the upper frame 17R and the lower frame 18R, respectively, to increase the rigidity of the main frame 14.

The rear frame 15 includes, as constituent members, seat rails 21L, 21R (only 21L is shown in Figure 1), middle frames 23L, 23R (only 23L is shown in Figure 1), and rail stays 24L, 24R (only 24L is shown in Figure 1). The seat rails 21L and 21R extend obliquely rearwards and upwards from the respective rear portions of the upper frames 17L and 17R, respectively. The middle frames 23L and 23R connect respective intermediate points 22L and 22R (only 22L is shown in Figure 1) of the seat rails 21L and 21R with the respective rear ends of the upper frames 17L and 17R, respectively. The rail stays 24L and 24R extend between the upper portion of the middle frame 23L and the rear portion of the seat rail 21L and between the upper portion of the middle frame 23R and the rear portion of the seat rail 21R, respectively.

A steering shaft 25 is provided in the head pipe 13 which constitutes a leading end portion of the body frame 11. A steering handlebar 26 which can be steered by the occupant is turnably supported by the upper end of the steering shaft 25. Front forks 31L, 31R (only 31L is shown in Figure 1) are attached to the lower end of the steering shaft 25 via a bottom bridge 27 which is formed to be generally triangular when viewed from above. A front wheel 32 is rotatably mounted between the lower ends of the front forks 31L, 31R.

Pivot plates 33L and 33R (only 33L is shown in Figure 1) extend between the seat rail 21L and the middle frame 23L and between the seat rail 21R and the middle frame 23R, respectively. The pivot plates 33L, 33R are provided with respective link members 34 extending downwards therefrom. The link members 34 are provided with a support shaft 35, and the power unit 12 (which also serves as a rear swing arm) is pivotably mounted on the support shaft 35. A rear wheel 36 which is driven by the power unit 12 is rotatably mounted to the rear end portion of the power unit 12. Rear cushion units 37L and 37R (only 37L is shown in Figure 1) for absorbing a shock from the road surface extend between the power unit 12 and the seat rail 21L and between the power unit 12 and the seat rail 21R, respectively.

An occupant seat 42 is mounted on the upper surfaces of the seat rails 21L, 21R.

The occupant seat 42 is provided rearwards of the head pipe 13. A straddle space 43 straddled by the occupant is formed between the steering handlebar 26 turnably supported by the.head pipe 13 and the occupant seat 42 on which the occupant sits. An airbag module 44 housing an airbag therein is installed forward of the occupant seat 42.

The airbag module 44 is disposed rearward of the head pipe 13 so as to partially overlap the head pipe 13 when the head pipe 13 is viewed from the front. In other words, at least a portion of the airbag module 44 is disposed within the vertical extent H of the head pipe 13 as viewed from the side, and the airbag module 44 is disposed to vertically overlap the head pipe 13 in the direction of height of the head pipe 13 when viewed from the front. Since the airbag module 44 is disposed to partially overlap the head pipe 13, the height of the upper end surface 44t of the airbag module 44 can be kept to a low level. If the height of the upper end surface 44t can be kept to a low level, space can be ensured above the airbag module 44. As a result, the flexibility of the layout in the vicinity of the steering handlebar 26 can be enhanced in the direction of height.

In the present embodiment, the airbag module 44 is disposed below the steering handlebar 26; therefore, the flexibility of designing the steering handlebar 26 and the periphery thereof can be enhanced. For example, flexibility with respect to the arrangement of the steering handlebar 26 and various members in the vicinity of the steering handlebar 26 is enhanced.

In addition, a portion 44z of the airbag module 44 is provided to face the straddle space 43.

The power unit 12 is composed of a transmission unit 46 incorporating a belt-type transmission and an engine 47 which extends forwards from the front end of the transmission unit 46.

The engine 47 is a multi-cylinder water-cooled 4-cycle engine in which a cylinder block 51, a cylinder head 52 and a cylinder head cover 53 are mounted to the transmission unit 46 in this order. An air cleaner unit 55 is connected to the upper surface of the cylinder head 52 via an intake pipe 54. An exhaust pipe 56 is joined to the lower surface of the cylinder head 52.

In the Figures, reference numeral 57 denotes a radiator unit for cooling the engine 47, 58 a front disk brake unit, 61 a front brake disk, 62 a front cowl covering the vehicle from the front, 63 a main cowl covering the side of the vehicle, 64 a rear cowl, 64G a grab rail, 65 a front fender, 66 a rear fender, 67 a silencer coupled to the rear end of the exhaust pipe 56, and 68 a main stand.

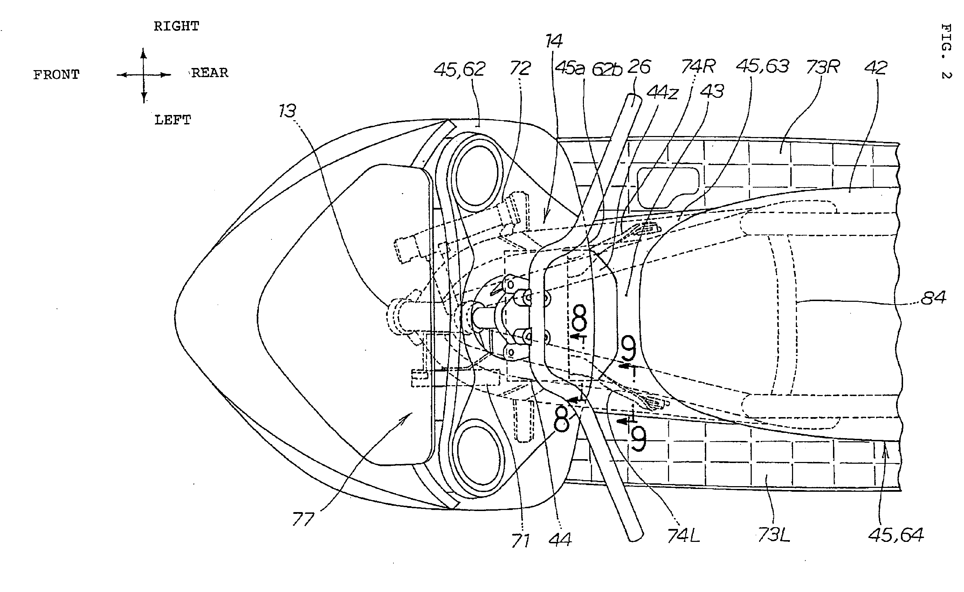

Fig. 2 is a plan view of a portion of the embodiment of the low-floor type vehicle.

The airbag module 44 mentioned above is disposed rearwards of the head pipe 13. An airbag control unit 71 for controlling the deployment of the airbag stored in the airbag module 44 is disposed on the left side of the head pipe 13. A key cylinder 72 is disposed on the right side of the head pipe 13. The key cylinder 72 is adapted to receive a key inserted thereinto when the power of the vehicle is turned on or off.

The head pipe 13, the airbag module 44 and the airbag control unit 71 (ie the front portion of the body frame 11) are covered by the front cowl 62 (a constituent element of the cowl 45). A portion 44z of the airbag module 44 is provided to face the straddle space 43 and projects from the rear surface 62b of the front cowl 62 (which forms the outer surface 45a of the cowl 45). The main cowl 63 (another constituent element of the cowl 45) is provided below the straddle space 43 to cover the main frame 14. The occupant seat 42 is disposed rearward of the airbag module 44. Step floors 73L and 73R are respectively provided at left and right side portions below the occupant seat 42. The step floors 73L, 73R each have a generally horizontal surface and serve as footrests on which the occupant's feet may be placed. The rear cowl 64 covers from the left and right sides of the passenger seat 42 to the rear portion of the vehicle. That is to say, the cowl 45 is a member that covers the body frame 11 and constitutes the external appearance surface of the vehicle. In addition, the cowl 45 is composed of the front cowl 62, the main cowl 63 and the rear cowl 64 in this order from the front to the rear of the vehicle.

Reference numerals 74L and 74R (only 74L is shown in Figure 1) denote left and right bag-mooring members, respectively, for retaining the airbag at respective predetermined positions when the airbag is expanded and deployed.

In the Figures, reference numeral 84 denotes a cross member which extends between the lower frames 18L, 18R.

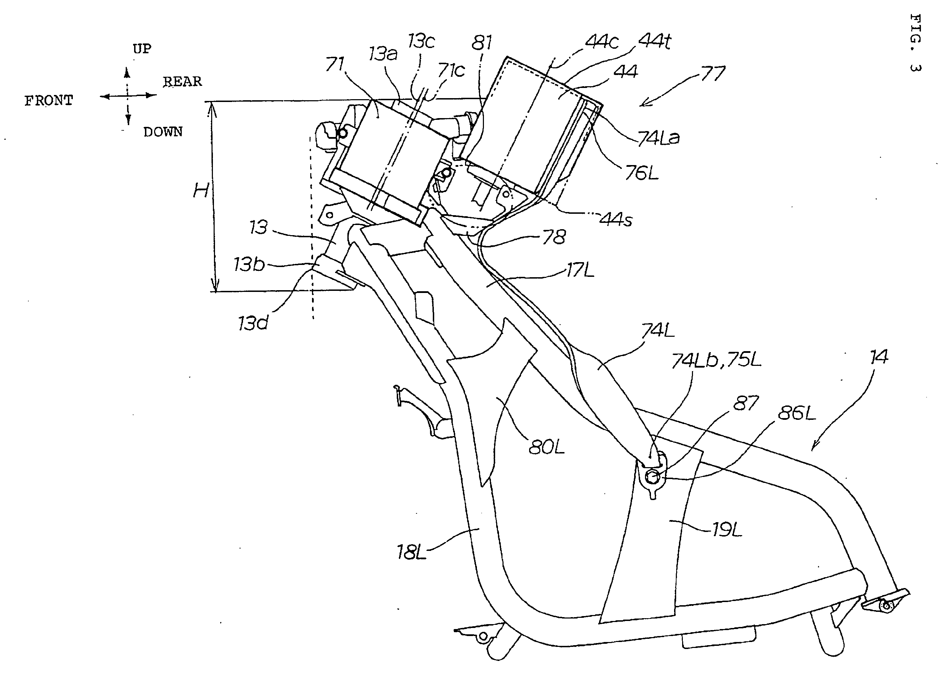

A description will now be made of the arrangement among the airbag module 44 constituting the airbag device 77, the main frame 14, the bag-mooring members 74L, 74R connecting between the airbag module 44, and the bag control unit 71 for controlling the deployment of the airbag, with reference to Figs. 3 to 5.

Fig. 3 is a side view of the main frame on which the airbag device is mounted. A bracket 78 is provided to extend from an upper portion of the upper frames 17L, 17R. The airbag module 44 is mounted to the bracket 78. Reference numeral 44s denotes a lower end edge of the airbag module 44.

Respective ends 74La, 74Ra (only 74La is shown in Figure 3) of the bag-mooring members 74L, 74R are secured to the airbag module 44. The respective other ends 74Lb and 74Rb (only 74Lb is shown in Figure 3) of the bag-mooring members 74L, 74R are secured to the connecting members 19L and 19R, respectively. The bag-mooring members 74L, 74R are described in detail later. Reference numerals 80L, 80R (only 80L is shown in Figure 3) denote connecting stays, one of which (80L) connects between the upper frame 17L and the lower frame 18L and the other of which (80R) connects between the upper frame 17R and the lower frame 18R.

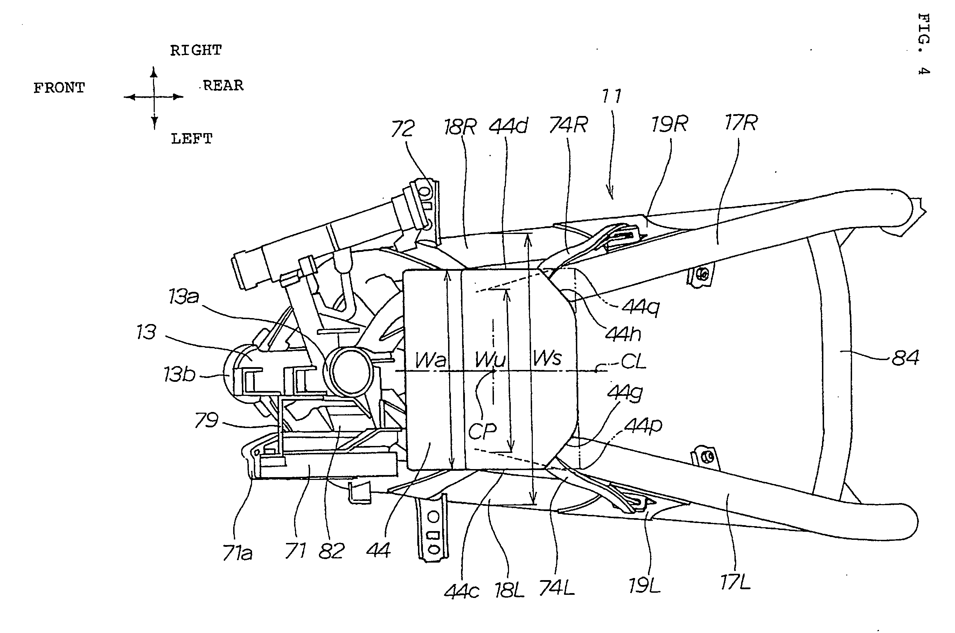

Fig. 4 is a plan view of the main frame on which the airbag device is mounted. The body frame 11 includes a pair of left and right upper frames 17L, 17R provided to extend downwards and rearwards from the upper portion of the head pipe 13, and a pair of left and right lower frames 18L, 18R provided to extend downwards rearwards from the lower portion of the head pipe 13. If the body frame 11 is viewed from above, with respect to the front-to-back centre CP, both left and right lateral surfaces 44c, 44d of the airbag module 44 are disposed outside the left-to-right external width Wu of the upper frames 17L, 17R and inside the left-to-right external width Ws of the lower frames 18L, 18R.

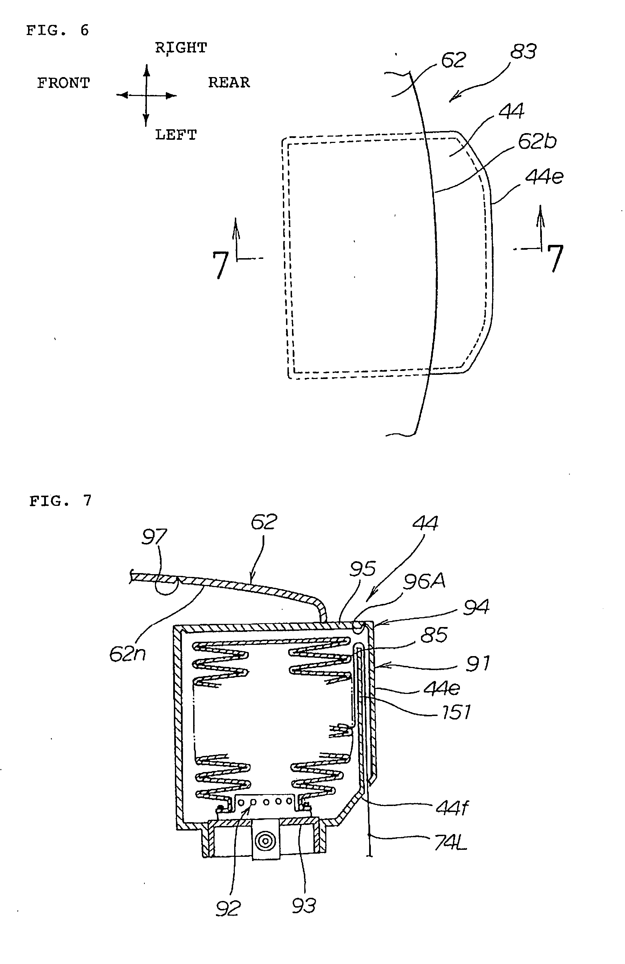

Both the left and right lateral surfaces 44c, 44d of the airbag module 44 are disposed outside the upper frames 17L, 17R; therefore, the airbag module 44 can be sufficiently wide. Because of this, when deployed, the airbag (see reference numeral 85 in Fig. 7) can be smoothly deployed.

Both the left and right lateral surfaces 44c, 44d of the airbag module 44 are disposed inside the left-to-right external width Ws of the lower frames 18L, 18R; therefore, increase of the width of the vehicle can be avoided. That is to say, the external width Wa of the airbag module 44 is set to a preferred width so as to provide the relationship Wu < Wa < Ws. This can achieve a balance between the deployment performance and compactness of the airbag module 44.

The airbag control unit 71 is disposed to one side of the head pipe 13. Specifically, in the preferred embodiment a stay 79 is provided to extend leftwards from the head pipe 13, and the airbag control unit 71 is secured to the stay 79.

The head pipe 13 is arranged slantwise so that a lower end 13b is located forward of an upper end 13a. A front end 71a of the airbag control unit 71 is disposed rearwards of the lower end 13b of the head pipe 13. Thus, when the vehicle takes an impact from the front, an impact force is first transmitted to and absorbed by the lower end 13b of the head pipe 13. This makes it difficult for the impact force to be transmitted to the airbag control unit 71, and so the airbag control unit 71 can be protected.

Referring,to Figs. 3 and 4, the airbag module 44 and the airbag control unit 71 are arranged to be offset from each other in the direction of height.

A space 81 is provided rearwards of the airbag control unit 71 to permit the movement of the airbag control unit 71. Because of this, even if the airbag control unit 71 takes an impact and is moved rearwardly, it can be accommodated in the movement space 81 of the airbag control unit 71. It is possible, therefore, to make the airbag control unit 71 unsusceptible to external force.

When the vehicle is viewed from the side, a central axis 44c of the airbag module 44 and a central axis 71c of the airbag central unit 71 are arranged parallel to the direction of an axis 13c of the head pipe 13. Since the airbag module 44 and the airbag control unit 71 are provided parallel to the direction of the axis 13c of the head pipe 13, the structure in the vicinity of the head pipe 13 can be simplified and made compact.

The pair of left and right bag-mooring members 74L, 74R are joined to the airbag (see reference numeral 85 of Fig. 7) to retain the airbag 85 at a position facing an occupant during expansion and deployment of the airbag 85. The bag-mooring members 74L and 74R are connected to the main frame 14 via the connecting members 19L and 19R, respectively.

The bag-mooring members 74L, 74R are arranged along the main frame 14. In addition, rear ends 75L and 75R (only 75L is shown in Figure 3) as the respective other ends 74Lb and 74Rb of the bag-mooring members 74L and 74R are respectively connected to the connecting members 19L and 19R via retainers 86L and 86R (only 86L is shown in Figure 3) and via bolts 87, 87 securing the retainer 86L and 86R.

Incidentally, the bag-mooring members 74L, 74R may be made by weaving the same resin-fibre yarn as used in vehicle seatbelts, or the same material as that of the airbag 85 may be used. The material, structure, sectional shape, etc. of the bag mooring members 74L, 74R may be chosen as desired as long as they perform the required functions and have the necessary strength taking into account changes over time with aging and the like.

In the present embodiment, the respective other ends 74Lb and 74Rb of the bag-mooring members 74L and 74R are connected to the connecting members 19L and 19R, respectively. However, the respective positions of the other ends 74Lb, 74Rb of the bag-mooring members 74L and 74R may change depending on the type of vehicle in some cases. In such a case, the respective connecting positions of the other ends 74Lb, 74Rb of the bag-mooring members 74L, 74R to the connecting members 19L, 19R can be changed to any appropriate position. For this reason, an increase in vehicle cost can be suppressed when the airbag device 77 is mounted on a different type of vehicle.

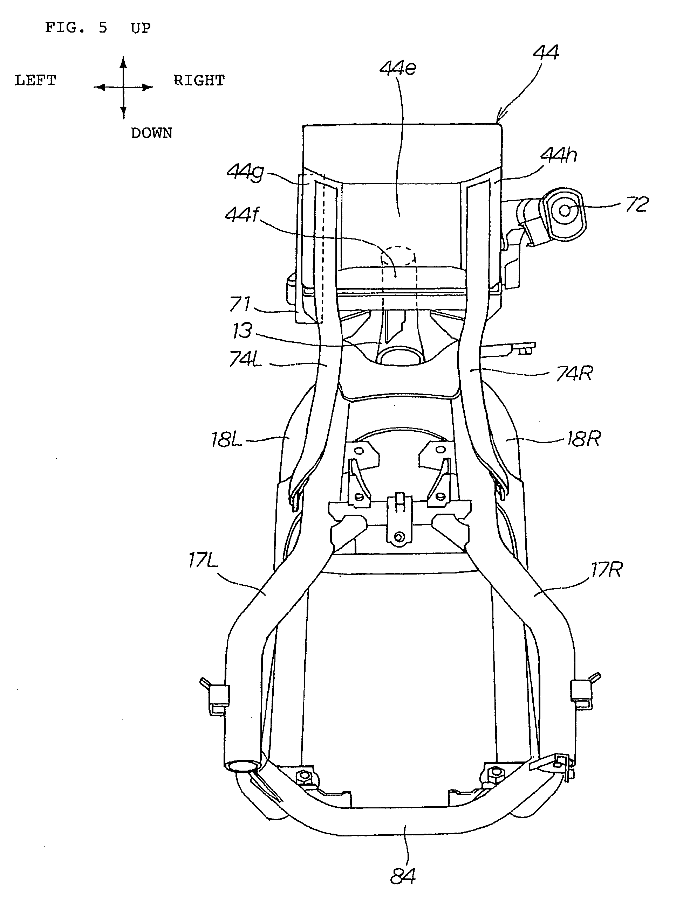

Fig. 5 is a rear view of the main frame on which the airbag device is mounted. When the vehicle is viewed from the rear, the airbag control unit 71 is disposed to at least partially overlap the airbag module 44.

The airbag module 44 has a box-like shape. In addition, the lower end edge 44s provided at the rear surface 44e of the airbag module 44 is chamfered by having a lower edge formed with a chamfered portion 44f. Therefore, the size of the straddle space 43 can be secured, to ensure that occupants can mount and dismount easily and comfortably.

With additional reference to Fig. 4, left and right end edges 44p and 44q provided at the rear surface 44e of the airbag module 44 are chamfered, with a left edge chamfered portion 44g and a right edge chamfered portion 44h, respectively. Therefore, the straddle space 43 can be enlarged. Since the straddle space 43 is sufficiently ensured, mounting and dismounting of the vehicle can further be facilitated, and occupant comfort at the time of mounting on the vehicle can be enhanced.

The key cylinder 72 for turning on or off a power supply to the vehicle is disposed on one side of the head pipe 13, specifically on the right side in the current embodiment. In addition, the airbag control unit 71 is disposed on the other side of the head pipe 13 (here, on the left side), so that the head pipe 13 is positioned between the key cylinder 72 and the airbag control unit 71. Thus, a space on the side opposite to the key cylinder 72 (see reference numeral 82 of Fig. 4) can effectively be utilized.

Fig. 6 is a plan view for assistance in explaining the arrangement relationship between the airbag module and cowl. The front cowl 62 is provided at the front portion 83 of the vehicle. The rear surface 44e of the airbag module 44 protrudes outwardly and rearwardly from the rear surface 62b forming the external surface of the front cowl 62. Therefore, an occupying space of the airbag module 44 occupying the inside of the front cowl 62 can be reduced. Because of this, the flexibility of layout of the other members in the front cowl 62 can be enhanced.

Fig. 7 is a cross-sectional view taken along line 7-7 of Fig. 6. The airbag module 44 housing the airbag 85 therein includes, as main constituent elements, a container portion 91; the airbag 85 folded and stored in the container portion 91; and an inflator 92 for generating gas used to expand and deploy the airbag 85.

The container portion 91 includes a bottom portion 93; a frame portion 94 including the rear surface 44e rising upward from the bottom portion 93 and left and right lateral surfaces (reference numerals 44c, 44d in Fig. 4) constituting part of the airbag module 44; and a lid portion 95 covering the frame portion 94 from above. A notched portion 96 is formed between the frame portion 94 and the lid portion 95 so as to make it possible to easily open the lid portion 95 from the frame portion 94 when the airbag 85 is expanded and deployed. The notched portion 96 is formed on the lid portion 95 to extend along the frame portion 94. Further, a notch 97 is formed on an inside surface 62n of the front cowl 62 so as to enable the expansion and deployment of the airbag 85.

A partition wall 151 is provided between the rear surface 44e and the airbag 85. The bag-mooring members 74L, 74R are partially folded and stored between the partition wall 151 and the rear surface 44.

With additional reference to Fig. 3, the airbag 85 is connected to the main frame 14 by using the pair of left and right bag-mooring members 74L, 74R retaining the airbag 85 at a position facing the occupant.

In addition, the bag-mooring members 74L, 74R are disposed along the main frame 14; therefore, when the airbag 85 is expanded and deployed, of the bag-mooring members 74L, 74R disposed along the main frame 14, respective front ends 76L, 76R of the bag-mooring members 74L, 74R serving as connecting portions with the airbag 85 are first lifted. As the expansion and deployment of the airbag 85 proceeds, the bag-mooring members 74L, 74R are lifted from the front ends 76L, 76R of the bag-mooring members 74L, 74R toward the rear ends 75L, 75R. As described above, since the bag-mooring members 74L and 74R are disposed along the upper frames 17L and 17R, respectively, constituting the main frame 14, it is possible for the bag-mooring members 74L, 74R to smoothly guide the airbag 85 in the expanding direction thereof.

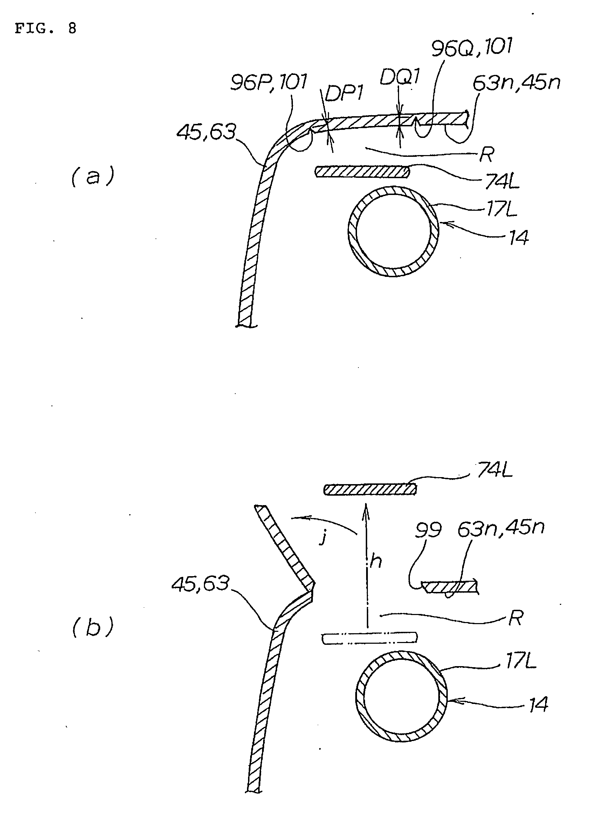

Fig. 8 includes cross-sectional views taken along line 8-8 of Fig. 2.

In Fig. 8(a), the bag-mooring member 74L is disposed in a space R defined between the main frame 14 and the cowl 45, and the main frame 14 is covered by the main cowl 63 (as a constituent element of the cowl 45). In addition, an inner surface 63n of the main cowl 63 is formed with two fragile portions 101 aligned generally with the sides of the bag-mooring member 74L, to allow the bag-mooring member 74L to smoothly function during operation of the airbag.

Incidentally, respective notched portions 96P and 96Q provided for the two left and right fragile portions 101, 101 are formed so that DP1 < DQ1, where the notch depth of the external notched portion 96P is DP1 and that of the internal notched portion 96Q is DQ1.

During non-operation of the airbag device 77, the bag-mooring member 74L is covered by the cowl 45 (the main cowl 63). Since the bag-mooring member 74L is covered by the cowl, the external appearance of the vehicle can be made satisfactory.

In Fig. 8(b), since the internal notch depth DQ1 is greater than the external notch depth DP1, the following occurs upon operation of the airbag device 77. The bag-mooring member 74L is moved in the direction of arrow h to hit and press the inner surface 63n of the main cowl 63. This cause the main cowl 63 to rupture at the internal notch portion 96Q and to be raised in the direction of arrow j around the external notch portion 96P, thereby forming an opening 99 in the cowl 45. The bag-mooring member 74L can pass through the opening 99 and move in the direction of arrow h.

The bag-mooring member 74R disposed on the right side of the vehicle has the same configuration and function as the bag-mooring member 74L disposed on the left side; therefore, its explanation is omitted.

The main frame 14 is covered by the main cowl 63 as the cowl 45. The bag-mooring members 74L, 74R are disposed along the space R defined between the main frame 14 and the main cowl 63. Thus, when the airbag device 77 is operated, it is possible to smoothly guide the airbag (see reference numeral 85 in Fig. 7) in the deploying direction thereof.

Further, the inner surface 62n of the front cowl 62 as the inner surface 45n of the cowl 45 is formed with fragile portions 101 along the bag-mooring members 74L, 74R. Thus, when the airbag 85 is deployed, the bag-mooring members 74L, 74R hit the corresponding fragile portions 101 formed on the inner surface 62n of the cowl 45 to form the opening 99 in the cowl 45. In addition, the bag-mooring members 74L, 74R are drawn from the cowl 45. Thus, the airbag 85 can smoothly be deployed without interrupting the deployment of the airbag 85.

That is to say, even though the left and right bag-mooring members 74L, 74R are covered from above by the cowl 45, the opening 99 can be formed in the cowl 45 at the desired time. Thus, it is possible to smoothly guide the airbag 85 in the deploying direction thereof without having the movement of the left and right bag-mooring members 74L, 74R impaired by the cowl 45.

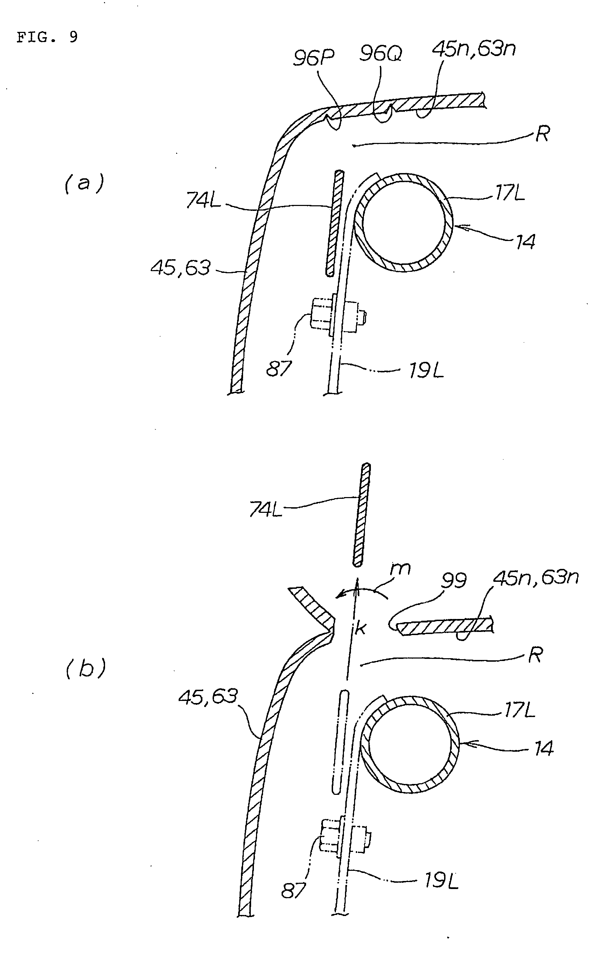

Fig. 9 includes cross-sectional views taken along line 9-9 of Fig. 2. The bag-mooring member 74L is disposed in the space R defined between the main frame 14 and the cowl 45.

In Fig. 9(a), during non-operation of the airbag device 77, the bag-mooring member 74L is covered by the cowl 45 (the main cowl 63).

In Fig. 9(b), upon operation of the airbag device 77, the bag-mooring member 74L is moved in the direction of arrow k to hit the inner surface 63n of the main cowl 63. This causes the main cowl 63 to rupture at the internal notched portion 96Q and to be raised in the direction of arrow m around the external notched portion 96P, thereby forming opening 99 in the cowl 45: The bag-mooring member 74L can pass through the opening 99 and move in the direction of arrow k.

A point largely different from Fig. 8 is that the bag-mooring member 74L is disposed in an orientation which differs from that of Fig. 8. The other configurations and function are not largely different from those of Fig. 8.

Incidentally, the bag-mooring member 74R disposed on the right side of the vehicle has the same configuration and function as the bag-mooring member 74L disposed on the left side; therefore, its explanation is omitted.

A description is next given of the operation of the low-floor type vehicle described above.

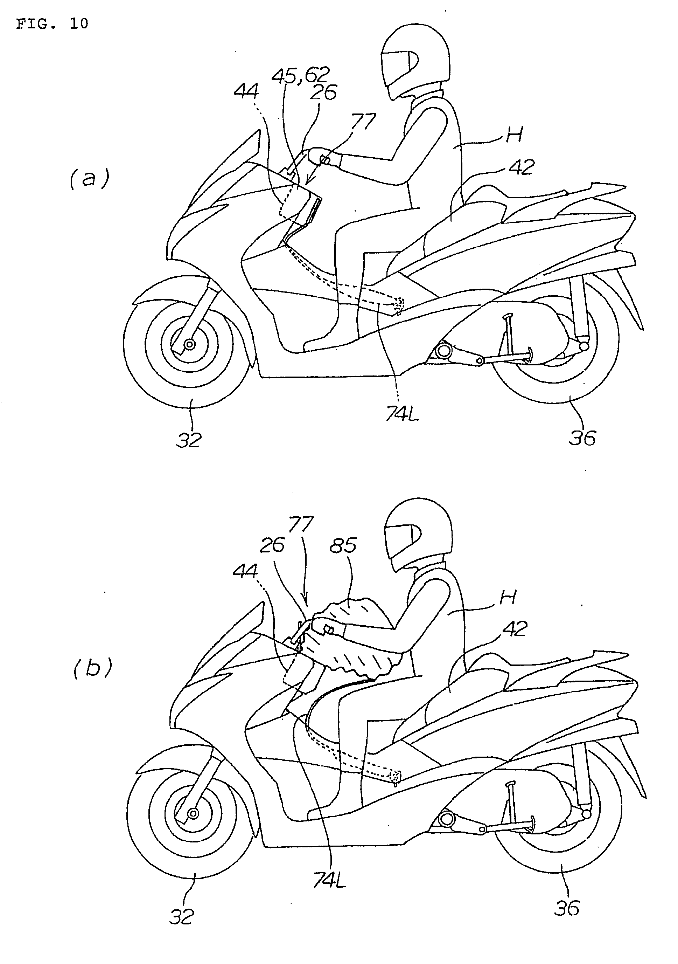

Fig. 10 includes views explaining the initial deployment of the airbag during normal travel according to the preferred embodiment.

In Fig. 10(a), during the non-operation of the airbag device 77, the bag-mooring members 74L, 74R are stored inside the front cowl 62 of the cowl 45.

In Fig. 10(b), when the airbag device 77 is operated, the airbag 85 is expanded and deployed. Along with this, the bag-mooring members 74L, 74R attached to the airbag 85 are moved out of the openings 99 formed between the notched portions (reference numerals 96P, 96Q in Figs. 8 and 9) due to the abutment of the bag-mooring members 74L, 74R.

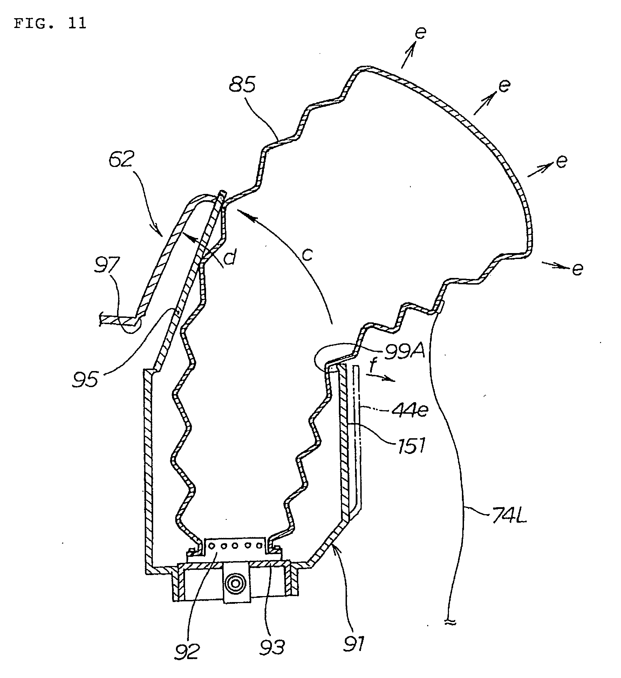

Fig. 11 is a cross-sectional view showing how the upper surface of the airbag module is opened to deploy the airbag.

When the airbag 85 is expanded and deployed, the expansion of the airbag 85 lifts the lid portion 95 in the direction of arrow c from the notched portion (see reference numeral 96A of Fig. 7) formed on the container portion 91, to form an opening portion 99A. In addition, the expansion of the airbag 85 lifts the rear portion of the front cowl 62 in the direction of arrow d at the notch 97 formed on the front cowl 62. Consequently, the airbag 85 is deployed in the directions of arrows e. Since the notched portion (see reference numeral 96 in Fig. 7) is provided on the container portion 91 and the notch 97 is provided on the front cowl 62, the airbag 85 can smoothly be deployed at the desired time.

At this time, along with the deployment of the airbag 85, the bag-mooring members 74L, 74R which were previously folded and stored between the partition wall 151 and the rear surface 44 are extended, and additionally the rear surface 44e is moved in the direction of arrow f in the figure along with the deployment of the airbag 85.

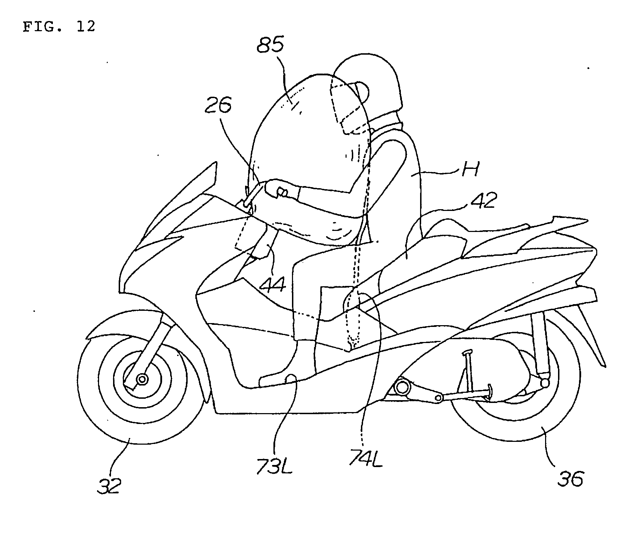

Fig. 12 is a view showing the airbag when fully deployed. The airbag 85 is deployed and hits the front of the occupant H. At this time, along with the deployment of the airbag 85, the bag-mooring members 74L, 74R stored in the cowl 45 come out of the cowl 45 and retain the airbag 85 at a desired position in front of the occupant H.

With reference to Figs. 1 and 2, the airbag module 44 is disposed in an unused space 102 rearward of the head pipe 13 to protrude into the straddle space 43. Therefore, a space can be ensured in the vicinity of the steering handlebar 26. Ensuring this space means that the airbag can be positioned without affecting the layout of members arranged in the vicinity of the steering handlebar 26, and so the flexibility of arranging the members in the vicinity of the steering handlebar 26 can be enhanced.

With reference to Fig. 5, since the airbag control unit 71 is disposed to at least partially overlap the airbag module 44 when viewed from the rear of the vehicle, the width of the airbag device 77 can be kept low. This can enhance the flexibility of arranging members.

With reference to Figs. 8 to 12, the pair of left and right bag-mooring members 74L, 74R are disposed along the main frame 14. When the airbag 85 is expanded and deployed, the front ends 76L, 76R of the bag-mooring members 74L, 74R which are connecting portions with the air bag 85 are first lifted. Along with the expansion and deployment of the airbag 85, the bag-mooring members 74L, 74R are lifted from the front ends 76L, 76R of the bag-mooring members 74L, 74R toward the rear ends 75L, 75R. As described above, since the bag-mooring members 74L, 74R are disposed along the main frame 14, it is possible for the bag-mooring members 74L, 74R to smoothly guide the airbag 85 in the deploying direction thereof.

The present embodiment uses a scooter-type motorcycle as the low-floor type vehicle; however, the invention can also be applied to a three-wheeled vehicle provided with a low floor portion, or the like.

As further options, the airbag module may be allowed to be disposed rearward of, forward of or upward of the steering handlebar, the rear surface of the airbag module may be allowed to be disposed so as not to protrude from the external surface of the cowl, and the width of the airbag module can be set at any length.

## Claims

1. A low-floor type vehicle (10, 10A) comprising:
a head pipe (13) rotatably supporting a steering handlebar (26) which may be steered by an occupant of the vehicle;
a main frame (14) extending downwardly and rearwardly from the head pipe (13);
an occupant seat (42) provided rearwards of the head pipe (13) and adapted to allow the occupant to sit thereon;
a straddle space (43) defined between the occupant seat (42) and the steering handlebar (26) and straddled by the occupant;
a cowl (45) provided below the straddle space (43) to cover the main frame (14);
left and right step floors (73L, 73R) on which the occupant's feet may be placed respectively provided at left and right side portions below the occupant seat (42); and
an airbag module (44) provided forward of the occupant seat (42) and storing an airbag (85) therein;
wherein the airbag module (44) is disposed rearward of the head pipe (13),
a pair of left and right bag-mooring members (74L, 74R) is provided for retaining the airbag (85) at a position facing the occupant upon expansion and deployment of the airbag (85),
the bag-mooring members (74L, 74R) are arranged between the left and right step floors (73L, 73R) in a plan view of the vehicle and along a space defined between an upper portion of the main frame (14) and the cowl (45);
the pair of bag-mooring members (74L, 74R) each have one end (74La, 74Ra) connected to the airbag (85) and the other end (74Lb, 74Rb) connected to the main frame (14) at a position below the occupant seat (42); and
an inner surface of the cowl (45) is formed with a fragile portion facing the pair of bag-mooring members (74L, 74R) which are arranged along the upper portion of the main frame.

2. A low-floor type vehicle as claimed in claim 1, wherein the main frame (14) includes a pair of left and right upper frames (17L, 17R) extending downwardly rearward from an upper portion (13c) of the head pipe (13), a pair of left and right lower frames (18L, 18R) extending downwardly rearward from a lower portion (13d) of the head pipe (13), and connecting members (19L, 19R) extending vertically between one of the upper frames (17L, 17R) and a corresponding one of the lower frames (18L, 18R); and
wherein the said other end (74Lb, 74Rb) of each of the bag-mooring members (74L, 74R) is connected to a corresponding one of the connecting members (19L, 19R).

## Patentansprüche

1. Niederflur-Fahrzeug (10, 10A), das Folgendes umfasst:
ein Kopfrohr (13), das drehbar eine Lenkstange (26) trägt, die durch einen Insassen des Fahrzeugs gelenkt werden kann,
einen Hauptrahmen (14), der sich von dem Kopfrohr (13) aus nach unten und nach hinten erstreckt,
einen Insassensitz (42), der hinter dem Kopfrohr (13) bereitgestellt wird und dafür eingerichtet ist, zu ermöglichen, dass der Insasse auf demselben sitzt,
einen Spreizraum (43), der zwischen dem Insassensitz (42) und der Lenkstange (26) definiert und durch den Insassen überspannt wird,
eine Verkleidung (45), die unterhalb des Spreizraums (43) bereitgestellt wird, um den Hauptrahmen (14) abzudecken,
ein linkes und ein rechtes Trittbrett (73L, 73R), auf denen die Füße des Insassen platziert werden können, jeweils bereitgestellt an einem linken beziehungsweise einem rechten Seitenabschnitt unterhalb des Insassensitzes (42), und
ein Airbag-Modul (44), das vor dem Insassensitz (42) bereitgestellt wird und einen Airbag (85) in demselben aufbewahrt,
wobei das Airbag-Modul (44) hinter dem Kopfrohr (13) angeordnet ist,
ein Paar aus einem linken und einem rechten Airbag-Befestigungselement (74L, 74R) bereitgestellt wird, um den Airbag (85) auf ein Ausdehnen und Entfalten des Airbags (85) hin bei einer dem Insassen gegenüberliegenden Position festzuhalten,
die Airbag-Befestigungselemente (74L, 74R) zwischen dem linken und dem rechten Trittbrett (73L, 73R) in einer Draufsicht des Fahrzeugs und entlang eines zwischen einem oberen Abschnitt des Hauptrahmens (14) und der Verkleidung (45) definierten Raums angeordnet sind,
bei dem Paar von Airbag-Befestigungselementen (74L, 74R) jeweils ein Ende (74La, 74Ra) mit dem Airbag (85) verbunden ist und das andere Ende (74Lb, 74Rb) an einer Position unterhalb des Insassensitzes (42) mit dem Hauptrahmen (14) verbunden ist und
eine Innenfläche der Verkleidung (45) mit einem zerbrechbaren Abschnitt geformt ist, der dem Paar von Airbag-Befestigungselementen (74L, 74R) gegenüberliegt, die entlang des oberen Abschnitts des Hauptrahmens angeordnet sind.

2. Niederflur-Fahrzeug nach Anspruch 1, wobei der Hauptrahmen (14) Folgendes einschließt: ein Paar aus einem linken und einem rechten oberen Rahmen (17L, 17R), die sich von einem oberen Abschnitt (13c) des Kopfrohrs (13) aus nach unten und nach hinten erstrecken, ein Paar aus einem linken und einem rechten unteren Rahmen (18L, 18R), die sich von einem unteren Abschnitt (13d) des Kopfrohrs (13) aus nach unten und nach hinten erstrecken, und Verbindungselemente (19L, 19R), die sich in Vertikalrichtung zwischen einem der oberen Rahmen (17L, 17R) und einem entsprechenden der unteren Rahmen (18L, 18R) erstrecken, und
wobei das andere Ende (74Lb, 74Rb) jedes der Airbag-Befestigungselemente (74L, 74R) mit einem entsprechenden der Verbindungselemente (19L, 19R) verbunden ist.

## Revendications

1. Véhicule du type à plancher bas (10, 10A) comprenant :
un tube de tête (13) supportant à rotation un guidon de pilotage (26) qui peut être dirigé par un occupant du véhicule ;
un cadre principal (14) s'étendant vers le bas et l'arrière depuis le tube de tête (13) ;
un siège d'occupant (42) aménagé à l'arrière du tube de tête (13) et qui est à même de permettre à l'occupant de s'y assoir ;
un espace de chevauchement (43) défini entre le siège d'occupant (42) et le guidon de pilotage (26) et chevauché par l'occupant ;
un capot (45) situé en dessous de l'espace de chevauchement (43) pour recouvrir le cadre principal (14) ;
des planchers étagés de gauche et de droite (73L, 73R) sur lesquels les pieds de l'occupant peuvent être placés et respectivement aménagés sur des parties latérales de gauche et de droite en dessous du siège (42) de l'occupant ; et
un module à coussin d'air (44) disposé devant le siège (42) de l'occupant et y stockant un coussin d'air (85) ;
dans lequel le module à coussin d'air (44) est disposé à l'arrière du tube de tête (13),
une paire d'éléments d'ancrage de coussin d'air de gauche et de droite (74L, 74R) est prévue pour retenir le coussin d'air (85) dans une position en regard de l'occupant lors de le gonflement et du déploiement du coussin d'air (85),
les éléments d'ancrage de coussin d'air (74L, 74R) sont aménagés entre les planchers étagés de gauche et de droite (73L, 73R) dans une vue en plan du véhicule et le long d'un espace défini entre une partie supérieure du cadre principal (14) et le capot (45) ;
les deux éléments d'ancrage de coussin d'air (74L, 74R) ont chacun une extrémité (74La, 74Ra) raccordée au coussin d'air (85) et l'autre extrémité (74Lb, 74Rb) raccordée au cadre principal (14) dans une position située en dessous du siège (42) de l'occupant ; et
une surface interne du capot (45) présente une partie fragile en regard de la paire d'éléments d'ancrage de coussin d'air (74L, 74R) qui sont aménagés le long de la partie supérieure du cadre principal.

2. Véhicule du type à plancher bas selon la revendication 1, dans lequel le cadre principal (14) comprend une paire de cadres supérieurs de gauche et de droite (17L, 17R) s'étendant vers le bas et l'arrière depuis une partie supérieure (13c) du tube de tête (13), une paire de cadres inférieurs de gauche et de droite (18L, 18R) s'étendant vers le bas et vers l'arrière depuis une partie inférieure (13d) du tube de tête (13) et des éléments de raccordement (19L, 19R) s'étendant verticalement entre l'un des cadres supérieurs (17L, 17R) et l'un correspondant des cadres inférieurs (18L, 18R) ; et
dans lequel ladite autre extrémité (74Lb, 74Rb) de chacun des éléments d'ancrage de coussin d'air (74L, 74R) est raccordée à l'un correspondant des éléments de raccordement (19L, 19R).
